(19) **Europäisches Patentamt**

**European Patent Office**

**Office européen des brevets**

(11) Veröffentlichungsnummer : **0 033 468**
**B1**

(12) **EUROPÄISCHE PATENTSCHRIFT**

(45) Veröffentlichungstag der Patentschrift :
**05.10.83**

(21) Anmeldenummer : **81100391.2**

(22) Anmeldetag : **20.01.81**

(51) Int. Cl.³ : **G 06 F   9/22**

(54) **Einrichtung zur Erzeugung von Bedingungscodes in mikroprogrammgesteuerten Universalrechnern.**

(30) Priorität : **31.01.80 DE 3003465**

(43) Veröffentlichungstag der Anmeldung :
**12.08.81 Patentblatt 81/32**

(45) Bekanntmachung des Hinweises auf die Patenterteilung : **05.10.83 Patentblatt 83/40**

(84) Benannte Vertragsstaaten :
**AT BE CH FR GB IT LI LU NL SE**

(56) Entgegenhaltungen :
**DE A 2 635 964**
**US A 3 875 565**
**US A 3 909 802**
**US A 4 008 462**

**IBM TECHNICAL DISCLOSURE BULLETIN, Band 21, Nr. 7, Dezember 1978, Seiten 2962-2965 New York, U.S.A. R.D. CROWLEY et al. : « Next address generation apparatus »**

(73) Patentinhaber : **SIEMENS AKTIENGESELLSCHAFT Berlin und München Wittelsbacherplatz 2 D-8000 München 2 (DE)**

(72) Erfinder : **Haff, Norbert, Dipl.-Ing. Bichlmairstrasse 10 a D-8021 Neuried (DE)**

EP 0 033 468 B1

Einrichtung zur Erzeugung von Bedingungscodes in mikroprogrammgesteuerten Universalrechnern

Die Erfindung betrifft eine zwischen Rechen- und Leitwerk geschaltete Einrichtung zur Erzeugung des den weiteren Befehlsablauf steuernden Bedingungscodes in einem mikroprogrammgesteuerten Universalrechner abhängig von einem Setzbefehl des Mikroprogramms in Verbindung mit Verknüpfungsnetzwerken, denen die benötigten Entscheidungszeichen des Rechenwerkes zugeführt werden.

Bei derartigen Einrichtungen ist für jeden einzelnen Setzbefehl oder für jede Gruppe von Setzbefehlen mit gleicher Setzvorschrift ein logisches Netzwerk vorgesehen, das aufgrund des Setzbefehles angesteuert wird und dann anhand der Entscheidungszeichen des Rechenwerks den Bedingungscode liefert. Jede Setzvorschrift erfordert also ein gesondertes Netzwerk. Weiterhin kann bei Verwendung von unterschiedlichen Befehlslisten (Emulation) der Bedingungscode einen unterschiedlichen Darstellungscode, z. B. binärcodierte oder nichtcodierte (1 aus n)-Darstellung, aufweisen oder unterschiedlichen Setzvorschriften unterliegen. Jede Anpassung des Rechners in Richtung auf einen Universalrechner erfordert daher eine Änderung bzw. Erweiterung der Verknüpfungsnetzwerke entsprechend den einzelnen Setzvorschriften.

Durch die DE-OS 26 35 964 ist des weiteren eine Einrichtung bekannt, bei der zur Ableitung des rechnereigenen Bedingungscodes und dessen Anpassung an unterschiedliche Befehlslisten bei Emulation gespeicherte Transformationslisten in Verbindung mit Masken verwendet werden. Diese Einrichtung ist zwar universell einsetzbar, setzt aber eine entsprechende Speicherung der für eine Ableitung des Bedingungscodes in der jeweils gewünschten Darstellungsform voraus und bindet dadurch verhältnismäßig teure Speicherkapazität.

Aufgabe der Erfindung ist es daher, eine Einrichtung der eingangs genannten Art zu schaffen, die weitgehend universell einsetzbar ist und den Anforderungen an einen Universalrechner in einfacherer Weise und mit geringerem Aufwand entspricht. Eine derartige Einrichtung ist gemäß der Erfindung dadurch gekennzeichnet, daß neben den Entscheidungszeichen des Rechenwerks als variable Eingangsparameter wenigstens eine Konstante in Form des log « 0 » bzw. « 1 » als Eingangsparameter für die den Bedingungscode liefernde Einrichtung vorgesehen ist, daß wenigstens ein Teil der Eingangsparameter einem gemeinsamen ersten logischen Netzwerk zum Invertieren und/oder zum Bilden einfacher logischer Verknüpfungsergebnisse zugeführt wird, daß die Eingangsparameter und die vom ersten logischen Netzwerk gelieferten Ergebnisse als Eingangsgrößen einer gemeinsamen Auswahlschaltung zugeführt werden, die abhängig von im Setzbefehl der Mikroprogrammsteuerung vorgegebenen Steuerparametern wirksam wird und die für die Bildung des Bedingungscodes durch ein gemeinsames zweites logisches Netzwerk erforderlichen Eingangsgrößen zur Auswertung freigibt.

Die neue Einrichtung gliedert sich also in drei Abschnitte. Zunächst wird eine Reihe von Eingangsgrößen bereitgestellt, die im wesentlichen aus den Entscheidungszeichen des Rechenwerks, deren invertierten Signalen, sowie den Konstanten log « 1 » und log « 0 » bestehen. Auch Verknüpfungen zweier Entscheidungszeichen zu zusätzlichen Eingangsgrößen sind möglich. Aus diesen Eingangsgrößen wird dann anhand der Steuerparameter im Setzbefehl eine Auswahl getroffen und damit die Anzahl der angebotenen Signale auf eine für die Setzvorschrift ausreichende Anzahl reduziert. Danach werden die ausgewählten Signale nochmals miteinander verknüpft und der richtige Bedingungscode gebildet. Die auf diese Weise gegebenen Setzmöglichkeiten sind vielfältig, da nicht nur eine Auswahl von fest verdrahteten Setzvorschriften zur Verfügung steht, sondern das Setzen des Bedingungscodes abhängig von den Bits der im Setzbefehl enthaltenen Steuerparameter individuell bestimmt werden kann.

Vereinfachungen für das zweite logische Netzwerk ergeben sich, wenn die Auswahlschaltung mit dem zweiten logischen Netzwerk über eine vorgegebene Anzahl von Signalleitungen verbunden ist, die jeweils alle mit einer Eingangsgröße belegt werden, wobei gegebenenfalls einzelne Eingangsgrößen mehrfach verwendet werden. Die Anzahl der zu verknüpfenden Eingangsgrößen wird damit auf eine maximale Anzahl beschränkt, wobei die Mehrfachbelegung mit einer Eingangsgröße weitere Anpassungsmöglichkeiten an den Aufbau des zweiten logischen Netzwerkes schafft.

Weitere Anpassungsmöglichkeiten ergeben sich gemäß einer Weiterbildung der Erfindung, wenn die Auswahlschaltung aus einer Reihe gleichartiger Multiplexer zur Auswahl jeweils einer aus einer Gruppe von vier Eingangsgrößen durch jeweils zwei der Steuerparameterbits besteht und die Gruppen von Eingangsgrößen abhängig vom Aufbau des verwendeten zweiten logischen Netzwerkes in unterschiedlicher Kombination aus der Gesamtzahl der Eingangsgrößen gebildet sind.

Eine bevorzugte Weiterbildung dieser Erfindung ist dadurch gekennzeichnet, daß insgesamt sechs Gruppen von Eingangsgrößen gebildet werden, von denen jeweils drei Gruppen eine Einheit bilden und über das zweite logische Netzwerk jeweils ein Ergebnisbit des Bedingungscodes in binär codierter Darstellung liefern, daß jeweils die erste Gruppe und die dritte Gruppe jeder Einheit identisch zusammengesetzt sind, wobei die erste Gruppe von den Eingangsgrößen « 0 », « 1 », Ergebnis ungleich Null direkt und invertiert und wobei die dritte Gruppe von den Eingangsgrößen « 0 », Überlauf, Ergebnis ungleich Null direkt und invertiert gebildet wird, während die zweite Gruppe der einen Einheit von den Größen « 1 », Übertrag, Vorzeichen invertiert und invertierte EXKLUSIV-ODER-Verknüpfung aus Überlauf und Vorzeichen sowie die zweite Gruppe der anderen Einheit von den Größen « 1 », Vorzeichen, Übertrag invertiert und EXKLUSIV-ODER-Verknüpfung aus Überlauf und Vorzeichen gebildet wird, und daß innerhalb des zweiten logischen Netzwerkes die Ausgänge der Multiplexer für die jeweils ersten und zweiten Gruppen einer Einheit durch ein UND-Glied verknüpft sind, dessen Ausgang wiederum mit dem Ausgang des Multiplexers für die jeweils dritte Gruppe derselben Einheit durch ein ODER-Glied verknüpft ist.

Unabhängig von der Ausbildung der Auswahlschaltung und des zweiten logischen Netzwerkes ist eine Änderung des vom zweiten logischen Netzwerk gelieferten Bedingungscodes durch zusätzliche Maßnahmen und damit eine Anpassung an unterschiedliche Befehlslisten möglich. Der größte Freiheitsgrad ergibt sich, wenn an die Ausgänge des zweiten logischen Netzwerkes eine Umsetzeinrichtung angeschlossen ist, die abhängig von weiteren Steuerparametern des steuernden Setzbefehls den gewünschten Darstellungscode liefert. Jedoch ist hierbei der Hardware-Aufwand am größten.

Da im allgemeinen eine Unterscheidung zwischen einer binärcodierten Darstellung mit zwei Bit und einer entsprechenden (1 aus n)-Aussage ausreichend ist, genügt es, daß an die Ausgänge des zweiten logischen Netzwerkes ein Decodierer für eine (1 aus n)-Aussage angeschlossen ist, der abhängig von der jeweils zu verarbeitenden Befehlsliste über ein Flipflop wirksam schaltbar ist.

Der schaltungsmäßig geringste Aufwand ergibt sich jedoch, wenn für das Bilden einer (1 aus n)-Aussage zwei aufeinanderfolgende Setzbefehle verwendet werden, die zwei aufeinanderfolgende Bitpaare einer vierteiligen (1 aus n)-Aussage nacheinander am Ausgang des zweiten logischen Netzwerkes erzeugen, und wenn die Auswahl der aufeinanderfolgenden Registerstellen des Bedingungscoderegisters abhängig von den Setzbefehlen durch entsprechende Inhibitsignale erfolgt. Diese Lösung nutzt die meistens vorhandene Inhibitsteuerung des aufnehmenden Registers. Jedoch sind zwei aufeinanderfolgende unterscheidbare Setzbefehle erforderlich, deren Ausführung zwangsläufig die doppelte Zeit kostet.

Ausführungsbeispiele der Erfindung seien nachfolgend anhand der Zeichnung näher erläutert. Im einzelnen zeigen :

Figur 1 ein Übersichtsschaltbild der Einrichtung gemäß der Erfindung,

Figur 2 die Gruppeneinteilung der Eingangsgrößen abhängig von den Bitpaaren der Steuerparameter und

Figur 3 den Bedingungscode und die jeweils dazugehörige Verknüpfung der Eingangsgrößen abhängig von der Funktion der Setzbefehle und den zugehörigen Bitkombinationen der Steuerparameter.

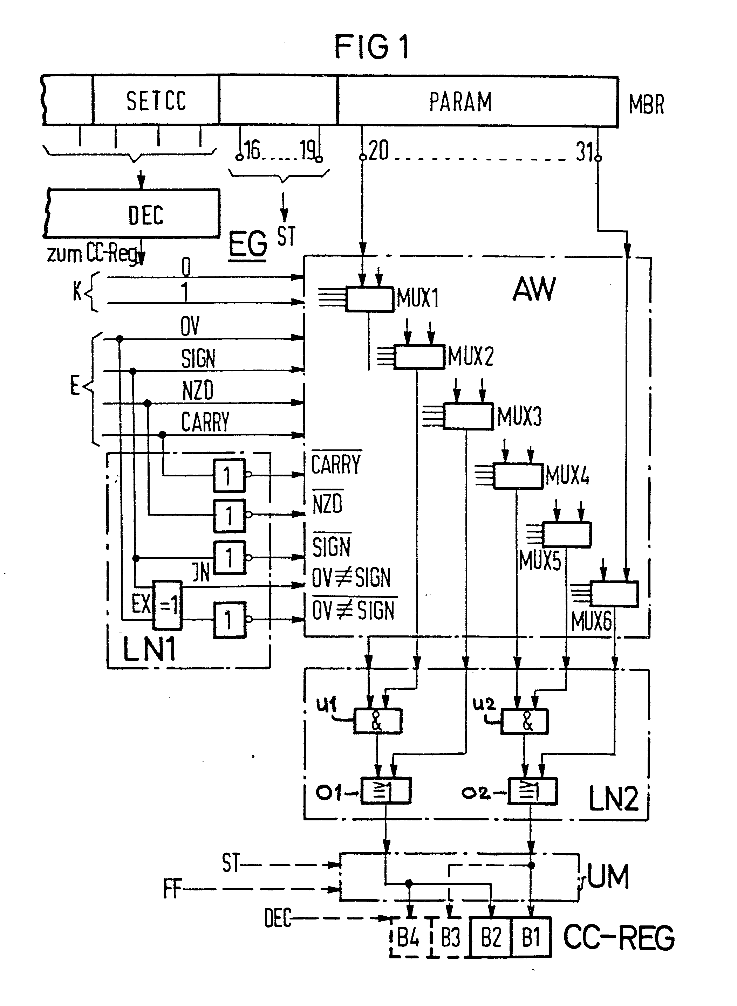

Fig. 1 zeigt die an das Mikrobefehlsregister MBR und den nachfolgenden Decoder DEC des Leitwerks eines Rechners angeschlossene Einrichtung zur Bildung des Bedingungscodes im Register CC-REG abhängig von den Entscheidungszeichen E des nicht dargestellten Rechenwerks als variable Eingangsparameter. Daneben sind zwei Konstante, nämlich log « 0 » und « 1 » als Eingangsparameter der Einrichtung gemäß der Erfindung vorgesehen.

Diese Einrichtung besteht im einzelnen aus einem ersten und einem zweiten logischen Netzwerk LN1 und LN2 und einer beide Netzwerke verbindenden Auswahlschaltung AW sowie einem an den Ausgang des zweiten logischen Netzwerkes LN2 angeschalteten Register CC-REG für die Aufnahme des Bedingungscodes. Zwischen diesem Register und dem Ausgang des zweiten logischen Netzwerks LN2 kann gegebenenfalls eine Umsetzeinrichtung oder ein Decodierer UM zur Änderung der Darstellungsform des Bedingungscodes geschaltet sein.

Das erste logische Netzwerk LN1 dient zur Invertierung und Verknüpfung der Eingangsparameter E und gegebenenfalls K, wenn nur eine der Konstanten « 0 » oder « 1 » direkt zur Verfügung gestellt wird und die zweite Konstante ebenfalls durch Invertierung abzuleiten ist. Im vorliegenden Beispiel stehen beide Konstanten « 0 » und « 1 » als Parameter direkt zur Verfügung. Von den variablen Eingangsparametern E werden die Signale für den Überlauf OV, für das Vorzeichen SIGN und Ergebnis ungleich Null NZD durch das erste logische Netzwerk LN1 mit Hilfe der Inverter JN invertiert. Darüber hinaus werden mit Hilfe des Exklusiv-ODER-Gliedes EX die Signale für den Überlauf OV und das Vorzeichen SIGN miteinander verknüpft und das Ergebnissignal zusätzlich invertiert, so daß insgesamt elf Signale als Eingangsgrößen EG für die Auswahlschaltung AW vorhanden sind. Durch das erste logische Netzwerk LN1 werden also aus den Eingangsparametern K und E zusätzliche Eingangsgrößen für die Auswahlschaltung AW gebildet.

Die Auswahlschaltung AW besteht aus sechs gleichartig aufgebauten Multiplexern MUX1 bis MUX6, die abhängig von jeweils zwei Steuerbits jeweils eine Eingangsgröße aus einer Gruppe von jeweils vier Eingangsgrößen auswählen. Insgesamt werden also aus den insgesamt elf Eingangsgrößen EG sechs Gruppen mit vier Eingangsgrößen gebildet und damit jeweils sechs Eingangssignale an das nachfolgende zweite logische Netzwerk LN2 angelegt. Die sechs Bitpaare für die Auswahlsteuerung durch die Multiplexer MUX1 bis MUX6 liefert bei jedem Setzbefehl SETCC der im Befehlsregister MBR enthaltene Wortteil PARAM, der entsprechend zwölf Bit, nämlich die Bitstellen 20 bis 31, umfaßt. Die jeweilige Funktion des Setzbefehles SETCC wird dabei durch die Bitkombination des Wortteiles PARAM bestimmt.

Das nachfolgende zweite logische Netzwerk LN2 legt in einfacher Form die Verknüpfung für einen aus zwei Bit bestehenden Bedingungscode in binärer Darstellungsform mit insgesamt vier verschiedenen Aussagen anhand der zugeführten sechs Eingangssignale fest. Dieses logische Netzwerk LN2 zerfällt in zwei Teile, die identisch aufgebaut sind. Jeder Teil besteht aus einem UND-Glied U1 bzw. U2 für die Verknüpfung jeweils zweier Eingangssignale und einem ODER-Glied 01 bzw. 02 für die Verknüpfung des Ausgangssignales des UND-Gliedes U1 bzw. U2 mit dem jeweils dritten Eingangssignal.

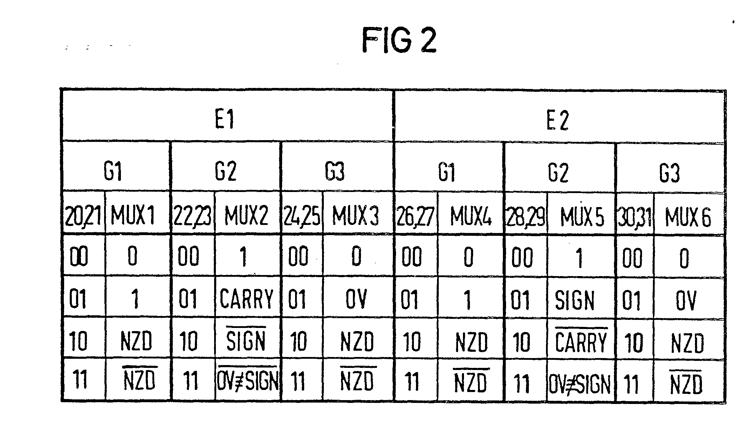

Das Schema der Bildung der sechs Gruppen mit je vier der Eingangsgrößen EG und die Auswahl jeweils einer Größe innerhalb jeder Gruppe durch die Multiplexer MUX1 bis MUX6 abhängig von den möglichen Bitkombinationen des jeweils steuernden Bitpaares im Wortteil PARAM des Setzbefehles SETCC im Hinblick auf das zweite logische Netzwerk LN2 ist aus Fig. 2 ersichtlich.

Insgesamt werden zwei Einheiten E1 und E2 mit je drei Gruppen G1 bis G3 gebildet, wobei jede Gruppe vier der insgesamt elf Eingangsgrößen EG umfaßt. In der Zeile unterhalb der Gruppen G... sind für jede Gruppe die steuernden Bitstellen des Wortteiles PARAM im Setzbefehl SETCC und die zugehörigen Multiplexer und darunter in den nächsten vier Zeilen entsprechend den jeweils möglichen vier Bitkombinationen die jeweils ausgewählte Eingangsgröße angegeben. So beziehen sich z. B. innerhalb von Gruppe G1 der Einheit E1 die Angaben auf die Bitstellen 20 und 21 sowie den Multiplexer MUX1 usw. Wie weiterhin ersichtlich ist, sind beim ausgewählten Ausführungsbeispiel die Gruppen G1 bzw. G3 in beiden Einheiten E1 und E2 jeweils identisch. Auch unterscheiden sich die beiden Gruppen G1 und G3 in beiden Einheiten E1 und E2 lediglich bezüglich der Bitkombination 01, indem in Gruppe G1 die Konstante « 1 » anstelle des Überlaufsignals OV in Gruppe G3 zur Auswahl steht. Dagegen sind die Gruppen G2 in beiden Einheiten E1 und E2 recht unterschiedlich zusammengesetzt. Insgesamt wird offensichtlich, daß nicht jeweils sechs verschiedene der insgesamt elf Eingangsgrößen EG auszuwählen sind, sondern daß auch einzelne der Eingangsgrößen EG in verschiedenen Gruppen gleichzeitig verwendet und ausgewählt werden können, z. B. « 0 » in den Gruppen G1 und G3 beider Einheiten E1 und E2.

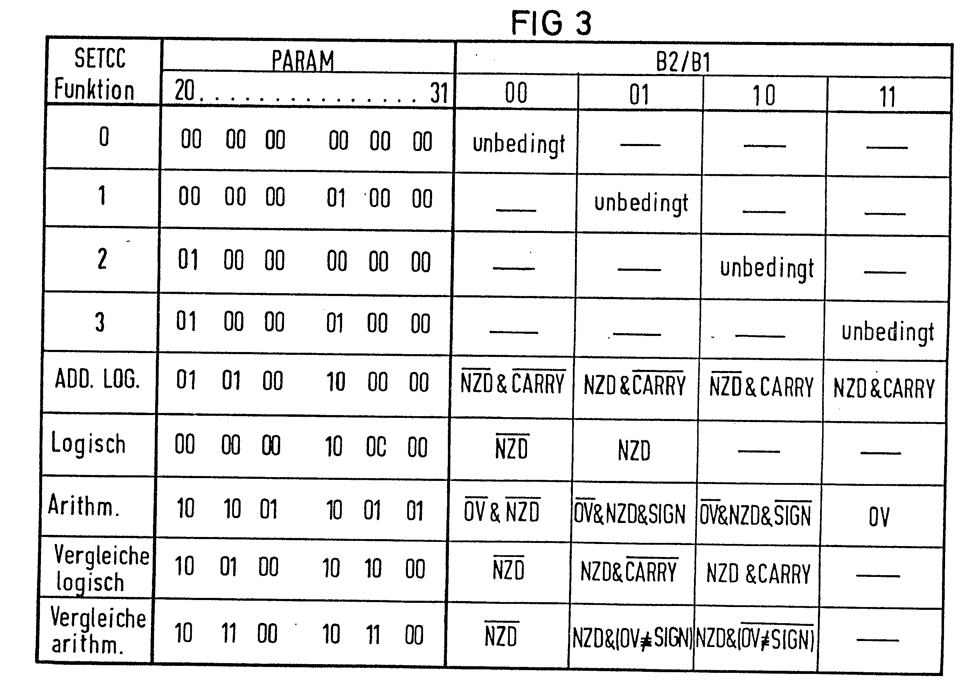

Der sich jeweils ergebende Bedingungscode, dargestellt durch die beiden Bitstellen B1/B1 im Register CC-REG, und die damit verbundene Verknüpfungsaussage abhängig von der Funktion der einzelnen Setzbefehle SETCC und den zugehörigen Bitkombinationen im Wortteil PARAM sind aus Fig. 3 ersichtlich.

Die ersten vier Funktionen beziehen sich jeweils auf eine bestimmte « unbedingte » Anzeige, d. h. auf eine von den Entscheidungszeichen E des Rechenwerks unabhängige Anzeige. Die restlichen fünf Funktionen beziehen sich dagegen auf übliche arithmetische bzw. logische Bedingungsanzeigen, abhängig von den jeweiligen Entscheidungszeichen E des Rechenwerks.

Die Zusammenstellung gemäß Fig. 3 ist dabei auf eine Reihe wesentlicher Setzbedingungen beschränkt. Daneben können durch einfache Änderungen der Bitkombinationen im Wortteil PARAM des Setzbefehles SETCC ohne weiteres weitere Setzbedingungen verwirklicht werden, ohne daß der Aufwand sich dadurch ändert.

Insgesamt ist also die Einrichtung gemäß der Erfindung durch Kombination von fest verdrahteten Setzvorschriften mit einer Auswahlsteuerung zur Bereitstellung der Eingangsgrößen in unterschiedlicher Kombination bezüglich der Festlegung und der Auswahl der einzelnen Setzbedingungen sehr flexibel. Allerdings wird zunächst der Bedingungscode nur in einem vorgegebenen Darstellungscode, beim Ausführungsbeispiel in einem Binärcode, geliefert. Damit die Einrichtung auch bei Befehlslisten, die einen anderen Darstellungscode des Bedienungscode erfordern, ohne weiteres verwendbar ist, sind zusätzliche Maßnahmen zur Umsetzung in den gewünschten Code zu treffen.

Diese Aufgabe kann z. B. die in Fig. 1 dem Register CC-REG vorgeschaltete Anordnung UM übernehmen, die in allgemeinster Form als parametergesteuerter Universalumsetzer ausgebildet sein kann und beispielsweise abhängig von weiteren Steuerbits 16 bis 19 des Setzbefehles SETCC, die über den Eingang ST einwirken, unterschiedlich angesteuert werden kann und den entsprechend gewünschten Darstellungscode liefert.

Im allgemeinen genügt jedoch lediglich die Unterscheidung zwischen einer binär codierten Darstellung mit zwei Bit und einer entsprechenden (1 aus n)-Aussage. Die Anordnung UM könnte daher auf einen einfachen Decodierer reduziert werden, der nach Bedarf wirksam geschaltet wird oder nicht. Da hierfür ein einzelnes binäres Signal genügt, wäre eine Steuerung über eine Steuerbitkombination wie beim möglichen Universalumsetzer viel zu aufwendig. Viel mehr kann das benötigte Umschaltesignal unmittelbar von der Art der jeweiligen Befehlsliste abgeleitet und dabei ein Flipflop gesetzt werden oder nicht, das dann — wie über den Eingang FF der Anordnung UM angedeutet — die erforderliche Umschaltung bewirkt.

Ohne zusätzlichen Hardware-Aufwand kommt man jedoch aus, wenn man für die Umschaltung auf eine (1 aus n)-Aussage die in der Regel vorhandene Inhibitsteuerung des aufnehmenden Registers CC-REG ausnutzt. Jedoch sind in diesem Falle zwei aufeinanderfolgende unterschiedliche Setzbefehle erforderlich, durch die die Einrichtung zur Erzeugung des Bedingungscodes zweimal nacheinander angesteuert wird und durch die die erforderlichen beiden Bitpaare B2/B1 und B4/B3 für das Register CC-REG nacheinander geliefert werden, was in Fig. 1 durch die direkten Verbindungen zwischen dem zweiten logischen Netzwerk LN2 und dem Register CC-REG angedeutet ist. Die Umschaltung zwischen den beiden Gruppen von Registerstellen erfolgt dann unmittelbar durch den Befehlsdecodierer DEC des Leitwerks abhängig von der Art des steuernden Setzbefehles.

Die Ausführung zweier Setzbefehle zur Erzeugung des Bedingungscodes erfordert zwar den doppelten Zeitaufwand gegenüber den beiden vorangehend beschriebenen Lösungsmöglichkeiten, jedoch dürfte im Vergleich zum sonst erforderlichen Hardware-Aufwand dies von untergeordneter Bedeutung sein, wenn vom Rechner überwiegend Befehlslisten verarbeitet werden, die eine binäre Codierung erfordern. Umgekehrt könnte bei überwiegender Verarbeitung von Befehlslisten, die eine (1 aus n)-Aussage für die Darstellung des Bedingungscodes erfordern, die Auswahlschaltung AW und das zweite logische Netzwerk LN2 so abgeändert sein, daß originär ein entsprechender Darstellungscode geliefert wird. Dabei könnte wegen der geringeren Bitzahl des Bedingungscodes bei codierter Darstellung auf den zweiten Setzbefehl verzichtet und die Steuerung allein durch die Bitkombinationen des Steuerparameters PARAM im Setzbefehl SETCC herbeigeführt werden.

Unabhängig davon läßt sich die beschriebene Lösung durch veränderte Gestaltung des Auswahlschemas für die Auswahlschaltung AW in Verbindung mit der Gestaltung des zweiten logischen Netzwerkes LN2 in beliebiger Weise variieren.

**Ansprüche**

1. Zwischen Rechen- und Leitwerk geschaltete Einrichtung zur Erzeugung des den weiteren Befehlsablauf steuernden Bedingungscodes in einem mikroprogrammgesteuerten Universalrechner abhängig von einem Setzbefehl des Mikroprogramms in Verbindung mit Verknüpfungsnetzwerken, denen die benötigten Entscheidungszeichen des Rechenwerkes zugeführt werden, dadurch gekennzeichnet, daß neben den Entscheidungszeichen (E) des Rechenwerks als variable Eingangsparameter (EP) wenigstens eine Konstante (K) in binärer Form « 0 » bzw. « 1 » als Eingangsparameter (EP) für die den Bedingungscode (CC) liefernde Einrichtung vorgesehen ist, daß wenigstens ein Teil der Eingangsparameter (EP) einem gemeinsamen ersten logischen Netzwerk (LN1) zum Invertieren und/oder zum Bilden einfacher logischer Verknüpfungsergebnisse zugeführt wird, daß die Eingangsparameter (EP) und die vom ersten logischen Netzwerk (LN1) gelieferten Ergebnisse als Eingangsgrößen (EG) einer gemeinsamen Auswahlschaltung (AW) zugeführt werden, die abhängig von im Setzbefehl der Mikroprogrammsteuerung vorgegebenen Steuerparametern (PARAM) wirksam wird und die für die Bildung des Bedingungscodes (CC) durch ein gemeinsames zweites logisches Netzwerk (LN2) erforderlichen Eingangsgrößen (EG) zur Auswertung freigibt.

2. Einrichtung nach Anspruch 1, dadurch gekennzeichnet, daß die Auswahlschaltung (AW) mit dem zweiten logischen Netzwerk (LN2) über eine vorgegebene Zahl (z. B. 6) von Signalleitungen verbunden ist, die jeweils alle mit einer Eingangsgröße (EG) belegt werden, wobei gegebenenfalls einzelne Eingangsgrößen (z. B. log « 0 ») mehrfach verwendet werden.

3. Einrichtung nach Anspruch 2, dadurch gekennzeichnet, daß die Auswahlschaltung (AW) aus einer Reihe gleichartiger Multiplexer (MUX1 bis MUX6) zur Auswahl jeweils einer aus einer Gruppe (G...) von vier Eingangsgrößen (EG) durch jeweils zwei der Steuerparameterbits besteht und daß die Gruppen (G...) von Eingangsgrößen (EG) abhängig vom Aufbau des verwendeten zweiten logischen Netzwerkes (LN2) in unterschiedlicher Kombination aus der Gesamtzahl der Eingangsgrößen (EG) gebildet sind.

4. Einrichtungen nach Anspruch 3, dadurch gekennzeichnet, daß insgesamt sechs Gruppen (G...) von Eingangsgrößen (EG) gebildet werden, von denen jeweils drei Gruppen (G1 bis G3) eine Einheit (E1 bzw. E2) bilden und über das zweite logische Netzwerk (LN2) jeweils ein Ergebnisbit des Bedingungscodes (CC) in binär codierter Darstellung liefern, daß jeweils die erste Gruppe (G1) und die dritte Gruppe (G3) jeder Einheit identisch zusammengesetzt sind, wobei die erste Gruppe (G1) von den Eingangsgrößen « 0 », « 1 », Ergebnis ungleich Null direkt und invertiert und wobei die dritte Gruppe (G3) von den Eingangsgrößen « 0 », Überlauf, Ergebnis ungleich Null direkt und invertiert gebildet wird, während die zweite Gruppe (G2) der einen Einheit (E1) von den Größen « 1 », Übertrag, Vorzeichen invertiert und invertierte EXKLUSIV-ODER-Verknüpfung aus Überlauf und Vorzeichen sowie die zweite Gruppe (G2) der anderen Einheit (E2) von den Größen « 1 », Vorzeichen, Übertrag invertiert und EXKLUSIV-ODER-Verknüpfung aus Überlauf und Vorzeichen gebildet wird, und daß innerhalb des zweiten logischen Netzwerkes (LN2) die Ausgänge der Multiplexer (MUX1/MUX2 bzw. MUX4/MUX5) für die jeweils ersten und zweiten Gruppen (G1, G2) einer Einheit durch ein UND-Glied (U1 bzw. U2) verknüpft sind, dessen Ausgang wiederum mit dem Ausgang des Multiplexers (MUX3 bzw. MUX6) für die jeweils dritte Gruppe (G3) derselben Einheit durch ein ODER-Glied (01 bzw. 02) verknüpft ist.

5. Einrichtung nach einem der Ansprüche 1 bis 4, dadurch gekennzeichnet, daß der von dem zweiten logischen Netzwerk (LN2) gelieferte Darstellungscode des Bedingungscodes (CC) durch zusätzliche Maßnahmen änderbar ist.

6. Einrichtung nach Anspruch 5, dadurch gekennzeichnet, daß an die Ausgänge des zweiten logischen Netzwerkes (LN2) eine Umsetzeinrichtung angeschlossen ist, die abhängig von weiteren Steuerparametern des steuernden Setzbefehles den gewünschten Darstellungscode liefert.

7. Einrichtung nach Anspruch 5, dadurch gekennzeichnet, daß an die Ausgänge des zweiten logischen Netzwerkes (LN2) ein Decodierer für eine (1 aus n)-Aussage angeschlossen ist, der abhängig von der jeweils zu verarbeitenden Befehlsliste über ein Flipflop wirksam schaltbar ist.

8. Einrichtung nach Anspruch 5, dadurch gekennzeichnet, daß für das Bilden einer (1 aus n)-Aussage zwei aufeinanderfolgende Setzbefehle verwendet werden, die zwei aufeinanderfolgende Bitpaare einer vierteiligen (1 aus n)-Aussage nacheinander am Ausgang des zweiten logischen Netzwerkes (LN2) erzeugen, und daß die Auswahl der aufeinanderfolgenden Registerstellen des Bedingungscoderegisters (CC-REG) abhängig von den Setzbefehlen durch entsprechende Inhibitsignale erfolgt.

**Claims**

1. A device connected between a calculating unit and a control unit, for the generation of the condition code, which controls the continued command sequence, in a micro-programme-control universal computer in dependence upon a set command of the micro-programme in association with logic linking networks which are supplied with the requisite decision signals from the calculating unit, characterised in that in addition to the decision signals (E) from the calculating unit, by way of variable input parameters (EP) there is provided at least one constant (K) in the binary form « 0 » or « 1 » as input parameter (EP) for the device which supplies the condition code (CC), that at least a portion of the input parameters (EP) is fed to a common, first, logic network (LN1) which serves to invert and/or form simple logic linking results, that the input parameters (EP) and the results supplied by the first logic network (LN1) are fed as input values (EG) to a common selection circuit (AW) which operates in dependence upon control parameters (PARAM) laid down in the set command of the micro-programme control unit and which releases for purposes of analysis the input values (EG) required for the formation of the condition code (CC) by a common second logic network (LN2).

2. Device as claimed in claim 1, characterised in that the selection circuit (AW) is connected to the second logic network (LN2) via a predetermined number (e. g. 6) of the signal lines all of which are allocated an input value (EG) and where individual input values (e. g. log « 0 ») may be used several times.

3. Device as claimed in claim 2, characterised in that the selection circuit (AW) consists of a series of similar multiplexers (MUX1 to MUX6) for the selection of one of a group (G...) of four input values (EG) by two of the control parameter bits, and that the groups (G...) of input values (EG) are formed in different combinations from the total number of input values (EG) in dependence upon the construction of the second logic network (LN2) which is used.

4. Devices as claimed in claim 3, characterised in that a total of six groups (G...) of input values (EG) are formed, of which three groups (G1 to G3) in each case form a unit (E1, E2), and each supply one result bit of the condition code (CC) in binary coded representation via the second logic network (LN2), that the first group (G1) and the third group (G3) of each unit are of identical composition, where the first group (G1) is formed by the input values « 0 », « 1 », « result unequal to « 0 » in direct and inverted form, and where the third group (G3) is formed by the input values « 0 », « overflow », « result unequal to 0 » in direct and inverted form, whereas the second group (G2) of the first unit (E1) is formed by the values « 1 », « carry », « sign inverted » and « inverted EXCLUSIVE-OR logic link of overflow and sign » and the second group (G2) of the other unit (E2) is formed by the values « 1 », « sign », « carry inverted » and « EXCLUSIVE-OR logic link of overflow and sign » and that within the second logic network (LN2) the outputs of the multiplexers (MUX1/MUX2 and MUX4/MUX5) for the first and second groups (G1, G2 respectively) of a unit are logic linked by an AND gate (U1, U2) whose output is itself logic linked by an OR gate (01,02) to the output of the multiplexer (MUX3, MUX6) for the third group (G3) of the same unit.

5. Device as claimed in one of the claims 1 to 4, characterised in that the representation code — supplied by the second logic network (LN2) — of the condition code (CC) can be modified by additional measures.

6. Device as claimed in claim 5, characterised in that the outputs of the second logic network (LN2) are connected to a converter device which supplies the desired representation code in dependence upon further control parameters of the controlling set command.

7. Device as claimed in claim 5, characterised in that the outputs of the second logic network (LN2) are connected to a decoder for a (1 from n) statement which can be actuated via a flip-flop in dependence upon the particular command list which is to be processed.

8. Device as claimed in claim 5, characterised in that a (1 from n) statement is formed by means of two consecutive set commands which generate two consecutive pairs of bits of a four-part (1 from n) statement consecutively at the output of the second logic network (LN2), and that the selection of the consecutive register positions of the condition code register (CC-REG) is carried out in dependence upon the set commands by means of appropriate inhibit signals.

**Revendications**

1. Dispositif monté entre une unité de calcul et une unité de commande pour produire un code de condition qui commande la poursuite du déroulement d'instructions dans un ordinateur universel, à commande par microprogramme, en fonction d'une instruction d'activation du microprogramme en liaison avec des réseaux combinatoires auxquels sont appliqués les signes de décision de l'unité de calcul, qui sont nécessaires, caractérisé par le fait qu'en plus des signes de décision (E) de l'unité de calcul, comme paramètres d'entrée variables (EP), il est prévu un dispositif fournissant une constante (K) sous la forme « 0 » ou « 1 » comme paramètres d'entrée pour le code de conditions (CC), qu'au moins une partie des paramètres d'entrée (EP) est appliquée à un premier réseau logique (LN1) pour inverser et/ou pour former des résultats combinatoires logiques simples, que les paramètres d'entrée (EP) et les résultats fournis par le premier réseau logique (LN1) sont appliqués en tant que grandeurs d'entrée (EG) à un circuit de sélection commun (AW) qui devient actif en fonction de paramètres de commande (PARAM) donnés à l'avance dans l'instruction d'activation de la commande par microprogramme et qui libère les grandeurs d'entrée qui sont nécessaires pour la formation du code de condition (CC) par un second réseau logique commun (LN2).

2. Dispositif selon la revendication 1, caractérisé par le fait que le circuit de sélection (AW) est relié au second réseau logique (LN2) par l'intermédiaire d'un nombre prédéterminé (par exemple 6) de conducteurs de signaux qui sont tous occupés respectivement par une grandeur d'entrée (EG), les différentes grandeurs d'entrée (par exemple « 0 » log) étant éventuellement utilisées à plusieurs reprises.

3. Dispositif selon la revendication 2, caractérisé par le fait que le circuit de sélection (AW) est constitué par une série de multiplexeurs identiques (MUX1 à MUX6) pour la sélection respectivement d'un parmi un groupe (G...) de quatre grandeurs d'entrée (EG) par respectivement deux des bits de paramètres de commande, et que les groupes (G...) de grandeurs d'entrée (EG) sont formés, en fonction de la constitution du second réseau logique (LN2) utilisé, suivant une combinaison différente du nombre total des grandeurs d'entrée (EG).

4. Dispositif selon la revendication 3, caractérisé par le fait qu'on forme, au total, six groupes (G...) de grandeurs d'entrée (EG) parmi lesquels respectivement trois groupes (G1 à G3) forment une unité (E1 et E2) et fournissent, par l'intermédiaire du second réseau logique (LN2), respectivement un bit de résultat du code de condition (CC) en représentation codée binaire, que respectivement le premier groupe (G1) et le troisième groupe (G3) de chaque unité sont constitués de façon identique, le premier groupe (G1) étant formé, directement ou inversé, par les grandeurs d'entrée « 0 », « 1 », résultat différent de zéro et le troisième groupe (G3) étant formé, directement ou inversé, par les grandeurs d'entrée « 0 », débordement, résultat différent de zéro, alors que le second groupe (G2) de l'une (E1) des unités est formé par les grandeurs « 1 », report, signe inversé ou combinaison logique inversée OU-Exclusif entre débordement et signe et que de même le second groupe (G2) de l'autre unité (E2) est formé par les grandeurs « 1 », signe, report inversé et combinaison logique OU-Exclusif entre débordement et signe, et qu'à l'intérieur du second réseau logique (LN2) les sorties des multiplexeurs (MUX1/MUX2 et MUX4/MUX5) pour respectivement les premiers et les seconds groupes (G1, G2) d'une unité, sont combinées par un circuit ET (U1 et U2), dont la sortie est à son tour combinée logiquement par un circuit OU (01 et 02), avec la sortie du multiplexeur (MUX3 et MUX6) pour respectivement le troisième groupe (G3) de la même unité.

5. Dispositif selon l'une des revendications 1 à 4, caractérisé par le fait que le code de représentation du code de condition (CC) fourni par le second réseau logique (LN2) est susceptible d'être modifié par des mesures supplémentaires.

6. Dispositif selon la revendication 5, caractérisé par le fait qu'aux sorties du second réseau logique (LN2) est relié un dispositif de conversion qui, en fonction d'autres paramètres de commande de l'instruction d'activation de commande, fournit le code de représentation souhaité.

7. Dispositif selon la revendication 5, caractérisé par le fait qu'aux sorties du second réseau logique (LN2) est raccordé un décodeur pour une proposition (1-parmi-n), et qui, en fonction de la liste d'instructions à traiter est susceptible d'être commandé dans son état de fonctionnement par un multivibrateur bistable.

8. Dispositif selon la revendication 5, caractérisé par le fait que pour la formation d'une proposition (1-parmi-n) on utilise deux instructions d'activation successives, qui produisent à la sortie du second réseau logique (LN2) deux paires de bits successives d'une proposition (1-parmi-n) en quatre parties, et que la sélection des emplacements successifs de registre du registre de code de condition (CC-REG) a lieu en fonction des instructions d'activation par des signaux d'inhibition correspondants.

FIG 1

# FIG 2

| E1 | | | | | | E2 | | | | | |
|---|---|---|---|---|---|---|---|---|---|---|---|
| G1 | | G2 | | G3 | | G1 | | G2 | | G3 | |
| 20,21 | MUX1 | 22,23 | MUX2 | 24,25 | MUX3 | 26,27 | MUX4 | 28,29 | MUX5 | 30,31 | MUX6 |
| 00 | 0 | 00 | 1 | 00 | 0 | 00 | 0 | 00 | 1 | 00 | 0 |
| 01 | 1 | 01 | CARRY | 01 | OV | 01 | 1 | 01 | SIGN | 01 | OV |
| 10 | NZD | 10 | $\overline{\text{SIGN}}$ | 10 | NZD | 10 | NZD | 10 | $\overline{\text{CARRY}}$ | 10 | NZD |
| 11 | $\overline{\text{NZD}}$ | 11 | OV≠SIGN | 11 | $\overline{\text{NZD}}$ | 11 | $\overline{\text{NZD}}$ | 11 | OV≠SIGN | 11 | $\overline{\text{NZD}}$ |

# FIG 3

| SETCC Funktion | PARAM 20 . . . . . . . . . . . . 31 | | | | | | B2/B1 00 | 01 | 10 | 11 |
|---|---|---|---|---|---|---|---|---|---|---|
| 0 | 00 | 00 | 00 | 00 | 00 | 00 | unbedingt | — | — | — |
| 1 | 00 | 00 | 00 | 01 | 00 | 00 | — | unbedingt | — | — |
| 2 | 01 | 00 | 00 | 00 | 00 | 00 | — | — | unbedingt | — |
| 3 | 01 | 00 | 00 | 01 | 00 | 00 | — | — | — | unbedingt |
| ADD. LOG. | 01 | 01 | 00 | 10 | 00 | 00 | $\overline{NZD}$&$\overline{CARRY}$ | NZD&$\overline{CARRY}$ | $\overline{NZD}$&CARRY | NZD&CARRY |
| Logisch | 00 | 00 | 00 | 10 | 0C | 00 | $\overline{NZD}$ | NZD | — | — |
| Arithm. | 10 | 10 | 01 | 10 | 01 | 01 | $\overline{OV}$&$\overline{NZD}$ | $\overline{OV}$&NZD&SIGN | $\overline{OV}$&NZD&$\overline{SIGN}$ | OV |
| Vergleiche logisch | 10 | 01 | 00 | 10 | 10 | 00 | $\overline{NZD}$ | NZD&$\overline{CARRY}$ | NZD &CARRY | — |
| Vergleiche arithm. | 10 | 11 | 00 | 10 | 11 | 00 | $\overline{NZD}$ | NZD&(OV≠SIGN) | NZD&$\overline{(OV≠SIGN)}$ | — |

0 033 468